# EUROPEAN PATENT APPLICATION

(11) **EP 4 046 945 A1**
(43) Date of publication of application: **24.08.2022**
(21) Application number: 21382137.4
(22) Date of filing: 20.02.2021
(51) Int. Cl.: B65G 57/00, B65G 61/00

(54) **PALLET SORTING AND STACKING SYSTEM AND CORRESPONDING METHOD**

(71) Applicant: Iclopallet S.L.U., 25230 Mollerussa (ES)
(72) Inventor: Caba Muntada, Joan, 25230 MOLLERUSSA (ES); Setó Pedrós, Marc, 25230 MOLLERUSSA (ES); Miró Nabau, Jaume, 25230 MOLLERUSSA (ES)
(74) Representative: Curell Suñol S.L.P.

(57) **Abstract**

Pallet sorting and stacking system (1) comprising: a lower first sorting station (2) and a first and a second stacking stations (10, 12). The system further comprises an upper second sorting station (4), arranged above said first sorting station (2), a swivelling conveyor arm (22) for delivering pallets to the first or the second sorting stations (2, 4). Also, a handling robotic arm (8), and a third stacking station (14) arranged between said first and second stacking stations (10, 12). The robotic arm (8) is attached to the ground and rotatably mounted around a vertical axis (24) surrounded by the sorting and stacking stations. In operation the robotic arm (8) can move at least one pallet (100) from either said first or said second sorting stations (2, 4) to respectively at least one among said first and/or second and/or third stacking stations (10, 12) for said at least one pallet (100) to be stacked according to said sorting criterion.

## Description

### Field of the invention

The invention relates to a pallet sorting and stacking system comprising: a lower first sorting station and a first and a second stacking stations.

The invention further relates to a method for sorting and stacking pallets.

### State of the art

Sorting of pallets is required for different reasons and particularly in the case of reusing used or recycled pallets. Sorting is required to separate pallets according to different criterions such as different pallet sizes; different pallets conditions among broken, repairable, or ready for reuse; different pallet colours; different humidity levels; or different markings on the pallet performed by operator according to other criterions, such as pallet type or the like.

In the state of the art, pallet sorting systems are already known. These systems comprise a first accumulation station, a first and a second stacking stations and a handling robotic arm arranged between the first sorting stations and the first and second stacking stations. The robotic arm is responsible for moving the pallets from the first sorting station to respectively the first or second stacking stations for the pallet to be stacked according to a predetermined sorting criterion.

Known pallet sorting systems can sort and stack between 500 and 600 pallets/hour. There is therefore the need of achieving higher sorting and stacking speeds.

As an alternative, DE 10021802 A1 discloses that pallets to be sorted are transported to a pallet stacker, the pallets are marshalled into singles and moved into a high-performance sorting appliance and are then moved within the appliance in a working cycle, with all stages being automatic. The pallets are inspected dependent upon set criteria and with suitable instruments in the pauses between the cycles within individual testing stations. Tested pallets are transferred into an appliance for rapid ejection. They are then stacked and removed automatically. This system does not reach the desired sorting and stacking speeds. Furthermore, it has a rigid configuration and is difficult to adapt to different layouts.

### Summary of the invention

It is an object of the invention to propose pallet sorting and stacking system which can sort and stack pallets coming from uneven pallet sorting groups, i.e., when the groups of pallets to sort are not evenly distributed. This must also be performed at a higher speed than the systems known in the art. This purpose is achieved by a pallet sorting and stacking system of the type indicated at the beginning, characterized in that it further comprises an upper second sorting station, arranged above said first sorting station, a swivelling conveyor arm able to swivel in operation according to a predetermined pallet sorting criterion between a lower position in which said conveyor arm delivers pallets to said first sorting station and an upper position in which said conveyor arm delivers pallets to said second sorting station, a handling robotic arm, and at least a third stacking station arranged between said first and second stacking stations, said robotic arm being attached to the ground and rotatably mounted around a vertical axis surrounded by said first and second sorting stations and said first, second and third stacking stations, said third stacking station, being arranged to the side of the robotic arm remote from said first and second sorting stations, such that in operation said robotic arm can move at least one pallet from either said first or said second sorting stations to respectively at least one among said first and/or second and/or third stacking stations for said at least one pallet be stacked according to said sorting criterion.

The system of the invention is particularly appropriate for sorting and stacking uneven pallet distributions. This kind of uneven distributions occur in situations such as classifying pallets according to a conservation or reusability condition, that is sorting pallets that are broken, which are a reduced percentage of the pallet distribution, from pallets that can be reused, being it the largest group of the distribution or pallet amount to sort.

In current sorting systems, speed is lost since the sorting has to take place directly at the accumulation station. Instead, the invention provides for a novel system in which at least two separate sorting stations are provided in a very compact solution, that is one sorting station above the other. In other words, the robot has already at least two pre-sorted types of pallets, such that the robotic arm can directly pick the pallets previously sorted and move them directly to the correct stack at the stacking stations. Thanks to this pre-sorting each time the same distance is covered from the sorting station to the corresponding correct stacking station. Therefore, the travelling path can be optimized as well as the sorting speed. Since the stacking stations corresponding to the pallets arriving in less number, are stacked at the third stacking station, that is the station which has the longest travelling path for the robot additional pallet overall stacking time can be saved. On the other hand, the most occurring type of pallet, can be stacked at the first or second stacking stations, which are near to the sorting stations. All this leads to an increased sorting and stacking speed compared to the systems known in the art. As is it known in the art, the pallets can be inspected and identified upstream of the swivelling conveyor arm by any suitable identification means, thus giving the correct instructions to the conveyor arm and the robot to proceed accordingly.

Furthermore, using a robotic arm provides more flexibility in the layout of the sorting and stacking system.

The invention further includes several preferred features that are object of the dependent claims and the utility of which will be highlighted hereinafter in the detailed description of an embodiment of the invention.

In a further embodiment seeking for an increased sorting speed, the system further comprises a first and a second conveyors defining a transporting path, said first conveyor being arranged between said conveyor arm and said first sorting station such that in operation, said first conveyor receives pallets from said conveyor arm and delivers said pallets to said first sorting station, said second conveyor being arranged between said conveyor arm and said upper second sorting station, arranged above said first conveyor, such that in operation, said second conveyor receives pallets from said conveyor arm and delivers said pallets to said second sorting station. Thanks to the arrangement of the conveyors, a plurality of incoming pallets can be accumulated on the conveyors already pre-sorted forming a sorting batch. This avoids interruptions in the sorting procedure when many pallets from one single type arrive at either the first or the sorting stations. If no conveyors are arranged between the swivelling conveyor arm and the sorting stations, then the sorting procedure must be stopped until the corresponding sorting station which is overloaded has been emptied by the robot.

In another embodiment seeking to increase the sorting flexibility the system comprises a third sorting station arranged between said first and second stations, said sorting station being mounted to receive pallets from one among said first or said second conveyors. Thanks to this configuration the pallets can be sorted in at three different separated groups.

Also, to increase the moving speed of the robotic arm, preferably said first and second stacking stations are symmetrically arranged around the robotic arm, at a constant radial distance to a central vertical axis of the robotic arm. This provides for symmetrical travelling paths avoiding more complex movements of the robotic arm at those positions in which the robotic arm must move more often.

In another embodiment said at least first and second stacking stations are symmetrically arranged around the robotic arm at diametrically opposed positions. Thanks to this configuration, the first and second stacking stations are close to the sorting stations, but without harming the travelling path to the stacking stations which are further away from the sorting stations.

Also, in order to gain stacking speed in a preferred embodiment said robotic arm is drivable to rotate around said vertical axis in a rotation angle of less than 360° between a starting rotation position and a final rotation position and said starting rotation position is placed between said third stacking station and one among said first or second stacking stations. Again, in case of sorting at least three groups of pallets, this arrangement minimizes the travelling path of the robotic arm to be covered.

Also, in order to further increase the flexibility of the system in another preferred embodiment the system comprises a fourth stacking station arranged between said first or second stacking station, adjacent to said third stacking station, and said starting rotation position is placed between said third stacking station or said fourth stacking station and one among said first or second stacking stations.

Another problem that the invention seeks to solve is to be able to deliver pallets to any of the sorting stations without neither having the need for individual conveyors for each sorting station nor having to wait for the sorting station to be free in case a same conveyor is shared by more than one sorting station. To this end, preferably said first and second sorting station comprise raising means movable between a lowered position for receiving a pallet, and a raised position for raising said pallet and holding means configured to received said pallet from said raising means and hold said pallet in raised position such that said raising means can move back to said lowered position for receiving further a pallet.

In order to have the most manoeuvrability possible, preferably said robot arm comprises six degrees of freedom.

Preferably said at least first and second stacking stations are symmetrically arranged around the plane containing the vertical axis of the robotic arm at a constant radial distance, at an angle of 180° to each other. This optimizes the relation among proximity of the stacking stations to the sorting stations and maximization of the available space for placing further stacking stations between the first and second stackings stations.

Also willing to solve the problem of providing a high speed pallet sorting and stacking system, the invention further proposes a method comprising the steps of: sorting a plurality of pallets with a swivelling conveyor arm able to swivel according to a predetermined pallet sorting criterion between: a lower position in which said conveyor arm can deliver at least one pallet to a first sorting station and a upper position in which said conveyor arm can deliver at least one pallet to a second sorting station, arranged above said first sorting station, providing a robotic arm attached to the ground and rotatably mounted around a vertical axis surrounded by said first and second sorting stations and a first, a second and a third stacking stations, said third stacking station, being arranged to the side of the robotic arm remote from said first and second sorting stations, moving with said robot at least one pallet from either said first or said second sorting stations to respectively at least one among a first and/or second and/or third stacking stations for said at least one pallet to be stacked according to said sorting criterion.

In another preferred embodiment the method further comprises the steps of arranging a first and a second conveyors defining a transporting path between said swivelling conveyor arm and respectively said first and said second sorting stations for transporting said pallet between said swivelling conveyor arm and respectively said first and said second sorting stations.

It is also preferable that the method further comprises the steps of receiving a pallet at any of said first or second sorting stations in a lowered position, raising said received pallet to a raised position with raising means, and holding said raised pallet in said raised position with holding means, moving said raising means back to said lowered position for receiving further a pallet at said first or said second sorting stations.

In an especially preferred embodiment of the method, it further comprises the steps of: sorting a plurality of pallets between said first and second sorting stations and a third sorting station arranged between said first and second stations, said third sorting station being mounted to receive pallets from one among said first or said second conveyors, said moving step with said robotic arm at least one pallet from either said first, said second or said third sorting stations to respectively at least one among said first and/or second and/or third stacking stations for said at least one pallet to be stacked according to said sorting criterion, and the most numerous type of pallet is stacked on the nearest of said first or second stacking stations while the less numerous type of pallet is stacked on the third stacking station. This also applies in case that the system comprises further stacking stations between the first and second stacking stations.

Finally, in another preferred embodiment during said moving step at least two pallets are moved from different sorting stations among either one of said first, second or third sorting stations to either one of said first, second or third stacking stations.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1, a top perspective view of a first embodiment of the system according to the invention.
Figure 2, a further top perspective view of the system of Figure 1.
Figure 3, a front view of the system of Figure 1.
Figure 4, a top plan view of the system of Figure 1.
Figure 5, a detailed perspective view of the swivelling arm area of the system of Figure 1.
Figure 6, a detailed perspective view of the first, second and third sorting stations area of the system of Figure 1.
Figure 7, a detailed perspective view of the swivelling arm area of the system of Figure 1.

### Detailed description of embodiments of the invention

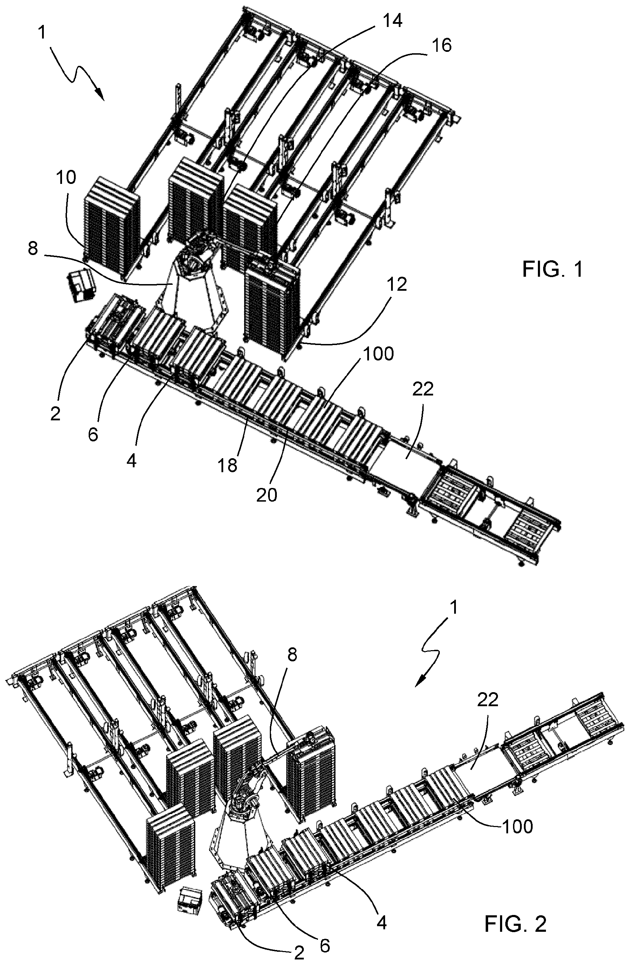

Figures 1 to 7 show an embodiment of the pallet sorting and stacking system 1 for sorting and stacking pallets coming from uneven pallet sorting groups.

As already explained previously, sorting among a pallet group is required for different reasons, but especially when the pallets must be reused.

A first case can be sorting among different pallet sizes, such as Euro-pallet sizes, which sizes can differ among 1200x800x145 mm, 1200x1000x144 mm or 1000x1200x144 mm in case of EUR 1, EUR 2, and EUR 3. Other sizes of pallets are also known, such as for example in the United States having the 48x40x5,6-inch pallet (1219x1016x142 mm). These are only non-limitative examples of the type of pallets which the system according to the invention can sort and stack

Another classification among pallets is either two- or four-way entry, regarding the way the pallet can be moved.

Other sorting possibility would be to differentiate the pallet colour, depending on its logistic use.

Another sorting requirement could be to separate pallets among three groups, which are, reusable pallets, repairable or recyclable pallets and finally disposable pallets, that is that they cannot be repaired anymore.

Yet another situation can occur by combining different subgroups, among size, colour, or conservation condition.

In other to sort and stack pallets coming from these uneven pallet sorting groups the invention proposes in the following embodiment a system 1 having three different areas, which are, the sorting area, the handling area, and the stacking area.

At the sorting area, the system of Figures 1 to 7 comprises a lower first sorting station 2 an upper second sorting station 4, arranged above the first sorting station 2, and a third sorting station 6 arranged between the first and second stations 2, 4, also being arranged at the height of the second sorting station 4. However, different arrangements are also conceivable.

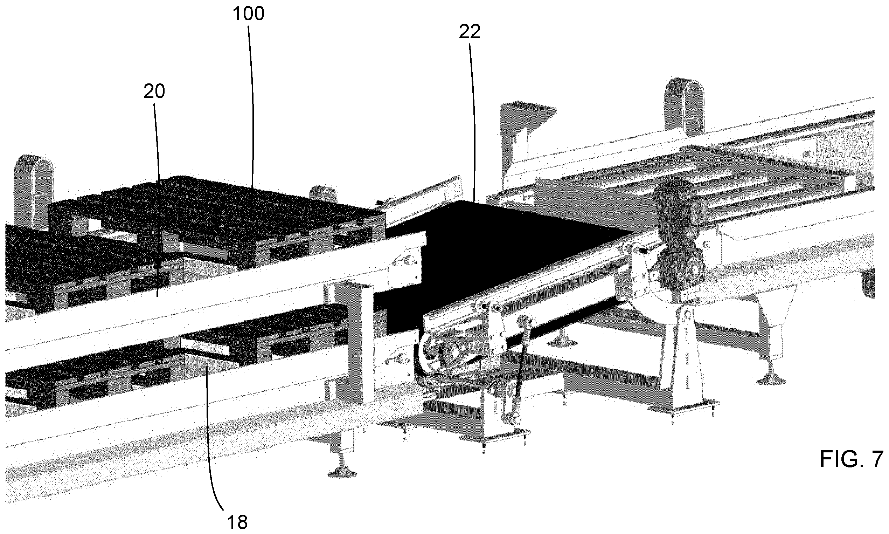

The system 1 further comprises at the sorting area a swivelling conveyor arm 22 able to swivel in operation according to a predetermined pallet 100 sorting criterion between a lower position, shown in Figure 7, in which the conveyor arm 22 delivers pallets 100 to the first sorting station 10 and an upper position in which the conveyor arm 22 delivers pallets 100 to said second sorting station 12.

Between the swivelling conveyor arm 22 and the sorting stations, the system 1 at the sorting area further comprises a first and a second conveyors 18, 20 defining a transporting path. The first conveyor 18 is arranged between the conveyor arm 22 and first sorting station 2 such that in operation, the first conveyor can receive pallets 100 from the conveyor arm 22 and deliver the pallets 100 to the first sorting station 4. On the other hand, the second conveyor 20 is arranged between the conveyor arm 22 and the upper second sorting station 4, above the first conveyor 18, such that in operation, the second conveyor 20 receives pallets 100 from the conveyor arm 22 and delivers the pallets 100 to the second sorting station 4. The sorting station 6 is mounted to receive pallets 100 from one among the first or the second conveyors 18, 20, but in this particular case, it receives the pallets from the second conveyor 20.

The conveyors can be, e.g., band conveyors, chain conveyors, idle-roll conveyors, or the like.

The first and a second conveyors 18, 20 each have an inlet end and a delivery end and each of the first and second conveyors define a transporting path extending from inlet end to the delivery end.

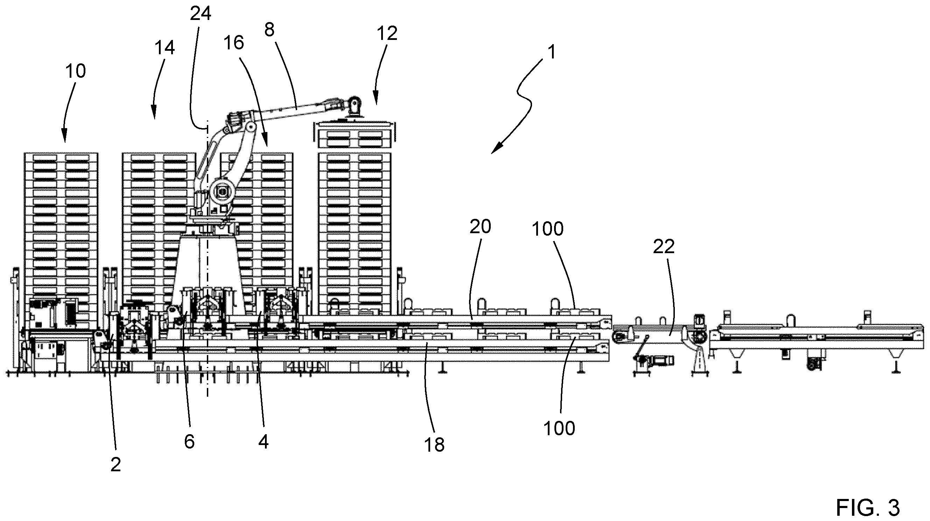

It is also apparent from Figure 3, that the first conveyor 18 is arranged between the conveyor arm 22 and the first sorting station 2. As it will be explained later on, in operation, the first conveyor 18 receives pallets 100 at said inlet end from said conveyor arm 22 and delivers the pallets 100 to said first sorting station 2 at said delivery end to the first sorting station 2. Similarly, the second conveyor 20 is arranged between the conveyor arm 22 and the upper second sorting station 4, above the first conveyor, such that in operation, the second conveyor 20 receives pallets 100 at the inlet end from the conveyor arm 22 and delivers the pallets 100 to the second sorting station 4 at the delivery end to the second sorting station 4.

Finally, in the sorting area of this embodiment, the first and second sorting stations 2, 4 comprise raising means 26, movable between a lowered position for receiving a pallet 100 and a raised position for raising said pallet 100 and holding means configured to receive pallet 100 from said raising means 26 and hold it in raised position such that the raising means 26 can move back to said lowered position for receiving further a pallet 100.

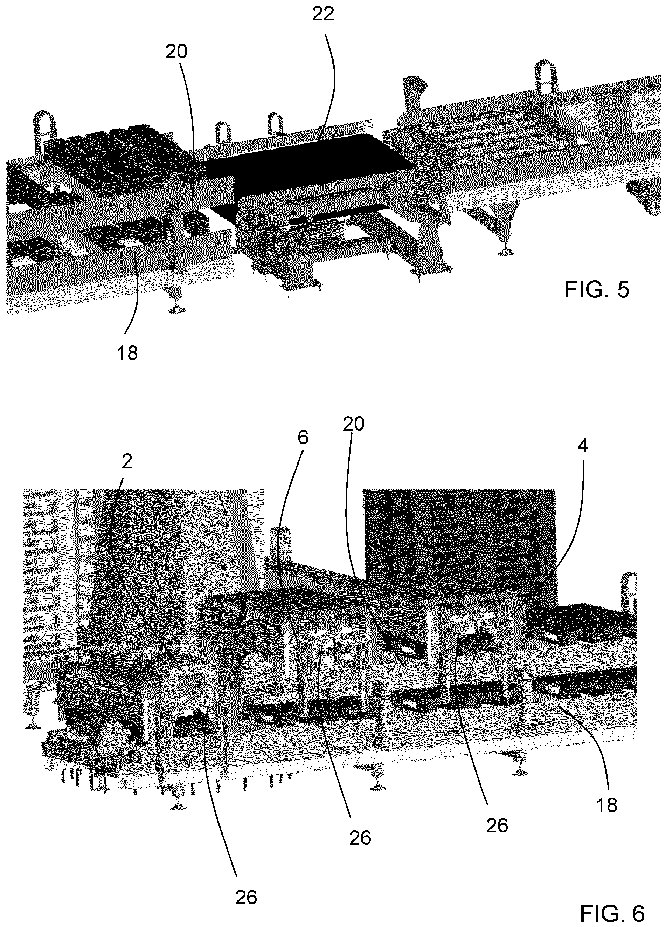

As it is apparent from Figure 6, the raising means 26 can be a crank-shaft mechanism driven by a pneumatic or an electric motor, however other solutions are possible such as pneumatic actuators or the like.

On the other hand, the holding means can be a plurality of telescopic pins which can move between an extended position and a withdrawn position. In the extended position they can be inserted under the lower face of the pallet 100 to avoid it from descending again together with the raising means 26 once they are lowered. When they adopt the withdrawn position, it allows the reception of the pallet 100 from the raising means 26.

This raising means 26 provide several advantages. First of all, it provides the possibility of pre-stacking several pallets in one of the sorting stations, such that more than one pallet 100 can be moved at the time. Furthermore, in this case, the raising means 26 allow that further pallets 100 can be moved underneath the second sorting station 4, thus avoiding the need of an extra third conveyor for the third sorting station 6 and consequently reducing the swivelling angle of the conveyor arm 22 and increasing its sorting speed.

At the stacking area, the system comprises a first, a second, a third and a fourth stacking stations 10, 12, 14 and 16. The third stacking station 14 is arranged between the first and the second stacking stations 10, 12. The fourth stacking station 16 is also arranged between the first or second stacking stations 10, 12, adjacent to the third stacking station 14.

The stacking stations comprises a plurality of rails 34 acting as pallet store, since they allow the movement of a finished stack to distance it from the stacking area near to the robot.

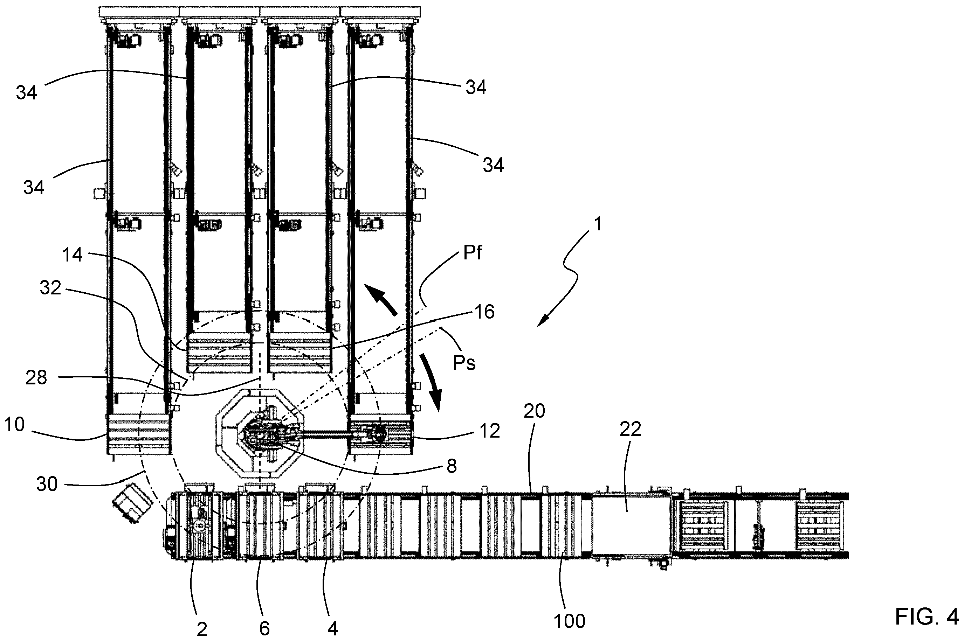

Finally, at the handling area the system comprises a handling robotic arm 8. The robotic arm 8 is attached to the ground and rotatably mounted around a vertical axis 24, shown in Figure 3. In figure 4, it is apparent, how the robotic arm 8 surrounded by the first, second and third sorting stations 2, 4, 6 and the first, second, third and fourth stacking stations 10, 12, 14, 16. The third and fourth stacking stations 14, 16 are arranged to the side of the robotic arm 8 remote from first, second and third sorting stations 2, 4. Therefore, these third and fourth stacking stations 14, 16 are conceived for receiving the type of pallet 100 moved by the robotic arm which is less numerous among the sorting criterion, thus allowing to gain sorting speed.

The first and second stacking stations 10, 12 are symmetrically arranged around the robotic arm 8 at diametrically opposed positions. In this case, the first and second stacking stations 10, 12 are symmetrically arranged around the robotic arm 8, at a constant radial distance to a central vertical axis 24 of the robotic arm 8, as indicated with the first circle 30 in Figure 4.

The third and fourth stacking stations 14, 16 are also symmetrically arranged to the central vertical plane 28 containing the vertical axis 24 of the robotic arm 8. In this case, the are also at opposed positions relative to this plane 28. However, it is not essential to the invention that the central point of all the stacking stations is arranged at the same distance to the central vertical axis 24. Indeed, it can be desirable that the distance of the third and fourth stacking stations 14, 16 is smaller to take advantage of the room left between the first and second stacking stations 10, 12, as indicated with the second circle 32 in Figure 4. This configuration shortens again the travelling paths that must be travelled by the robotic arm 8 when moving to these further stacking stations to stack a pallet 100.

In this case, the robotic arm 8 is drivable to rotate around the vertical axis 24 in a rotation angle of less than 360° between the starting rotation position Ps in Figure 4 and a final rotation position Pf. The starting rotation position Ps is placed in this case between the fourth stacking station 16 the second stacking station 12. The arrows in Figure 4 indicated the sense of rotation back and forth of the robotic arm 8 between positions Ps and Pf.

In operation the robotic arm 8 moves at least one pallet 100 from either one of the first, second or third sorting stations 2, 4, 6 to respectively at least one among the first to fourth stacking stations 10, 12, 14, 16 for the pallet or pallets 100 to be stacked according to the sorting criterion. However, more than one pallet 100 can be moved a time. In the invention it is also not compulsory that the pallets moved belong to the same classification. For example, the robotic arm 8 can move first to the fourth stacking station 16, leave one first type of pallet 100, and then move back to the third stacking station 14 and stack a second type of pallet 100.

The system 1 described before, has a sorting capacity of about 1,200 pallets/hour, which is about the double to the systems known in the art.

Below the method according to the invention is further explained. The method for sorting and stacking pallets 100 with the machine already describe comprises the steps of sorting a plurality of pallets 100 with the swivelling conveyor arm 22 able to swivel according to a predetermined pallet 100 sorting criterion between a lower position and an upper position.

In the lower position shown in Figure 7, the conveyor arm 22 delivers the pallets 100 to the first sorting station 2 with first conveyors 18 defining a transporting path between this swivelling conveyor arm 22 and the first sorting station 2 for transporting the pallet 100 between the swivelling conveyor arm 22 and the first sorting stations 2, 4.

On the opposite, in the upper position the conveyor arm 22 delivers the pallets 100 to the second or the third sorting stations 4, 6 arranged above said first sorting station 2.

Then the robotic arm 8 attached to the ground and rotatably mounted around the vertical axis 24 surrounded by the first, second and third sorting stations 2, 4, 6 and the first, second, third and fourth stacking stations 10, 12, 14, 16 moves at least one pallet 100 from either one of said first, second or third sorting stations 2, 4, 6 to respectively one among the first and/or second and/or third and/or stacking stations 10, 12 for the pallet 100 to be stacked according to said sorting criterion.

The sorting criterion can be decided by any sorting device arranged upstream of said swivelling conveyor arm 22, such as a camera, and infrared sensor or any other kind of sensors connected to a control computer functionally associated to the driving means of swivelling conveyor 22 and the robotic arm 8 for sorting the pallets 100 and later stacking them correctly.

In order to increase the flexibility, the method further comprises the steps of receiving the pallet 100 at any of the first, second or third sorting stations 2, 4, 6 in a lowered position, and raising the received pallet 100 to a raised position with the raising means 26.

Once at the raised position, the holding means hold the raised pallet 100 in the raised position and the raising means 26 are moved back to the lowered position for receiving a further pallet 100 at said first, second or third sorting stations 2, 4.

In the method, the third sorting station 6 is mounted to receive pallets 100 from the second conveyor 18, 20.

Finally, the moving step with said robot at least one pallet 100 from either said first, said second or said third sorting stations 2, 4, 6 to respectively at least one among said first and/or second and/or third stacking stations 10, 12, 16 for the pallet 100 to be stacked according to said sorting criterion. It must be pointed out that the most numerous type of pallet 100 is stacked on the nearest of said first or second stacking stations 10, 12, while the less numerous type of pallet is stacked on the third, or fourth stacking stations 16, 18. This bring enormous efficiency to the stacking speed.

It must also be pointed out that certain sorting station, among the first, second or third sorting stations 2, 4, 6, must not compulsorily have one single pallet 100 type. The possibility exists, e.g., to receive pallets 100 mixed in a random manner. In this case, a first type A is received in the first sorting station 2, a second type B is received in the second sorting station 4, while the third sorting station receives a mix of pallets A and B. Also, there is not predetermined arrival order.

In this case, the system 1 can move at least two pallets 100 from different sorting stations among either one of said first, second or third sorting stations 2, 4, 6 to either one of said first, second, third or fourth stacking stations 10, 12, 14, basing on the already prepared pallet pre-stacks at the first, second or third sorting stations 2, 4, 6.

## Claims

1. Pallet sorting and stacking system (1) comprising:
[a] a lower first sorting station (2) and
[b] a first and a second stacking stations (10, 12), **characterized in that** it further comprises
[c] an upper second sorting station (4), arranged above said first sorting station (2),
[d] a swivelling conveyor arm (22) able to swivel in operation according to a predetermined pallet (100) sorting criterion between
[i] a lower position in which said conveyor arm (22) delivers pallets (100) to said first sorting station (10) and
[ii] an upper position in which said conveyor arm (22) delivers pallets (100) to said second sorting station (12),
[e] a handling robotic arm (8), and
[f] at least a third stacking station (14) arranged between said first and second stacking stations (10, 12),
[g] said robotic arm (8) being attached to the ground and rotatably mounted around a vertical axis (24) surrounded by
[i] said first and second sorting stations (2, 4) and
[ii] said first, second and third stacking stations (10, 12, 14), said third stacking station (14), being arranged to the side of the robotic arm (8) remote from said first and second sorting stations (2, 4),
such that in operation said robotic arm (8) can move at least one pallet (100) from either said first or said second sorting stations (2, 4) to respectively at least one among said first and/or second and/or third stacking stations (10, 12) for said at least one pallet (100) to be stacked according to said sorting criterion.

2. The pallet sorting and stacking system (1) according to claim 1, **characterized in that** it further comprises
[a] a first and a second conveyors (18, 20) defining a transporting path,
[b] said first conveyor (18) being arranged between said conveyor arm (22) and said first sorting station (2) such that in operation, said first conveyor receives pallets (100) from said conveyor arm (22) and delivers said pallets (100) to said first sorting station (2),
[c] said second conveyor (20) being arranged between said conveyor arm (22) and said upper second sorting station (4), above said first conveyor (18), such that in operation, said second conveyor (20) receives pallets (100) from said conveyor arm (22) and delivers said pallets (100) to said second sorting station (4).

3. The pallet sorting and stacking according to claim 2, **characterized in that** it comprises
[a] a third sorting station (6) arranged between said first and second stations (2, 4),
[b] said third sorting station (6) being mounted to receive pallets (100) from one among said first or said second conveyors (18, 20).

4. The pallet sorting and stacking system (1) according to any of claims 1 to 3, **characterized in that** said first and second stacking stations (10, 12) are symmetrically arranged around the robotic arm (8), at a constant radial distance to a central vertical axis of the robotic arm (8).

5. The pallet sorting and stacking system (1) according to claim 4, **characterized in that** said at least first and second stacking stations (10, 12) are symmetrically arranged around the robotic arm (8) at diametrically opposed positions.

6. The pallet sorting and stacking system (1) according to any of claims 3 to 5, **characterized in that** said robotic arm (8) is drivable to rotate around said vertical axis (24) in a rotation angle of less than 360° between:
[i] a starting rotation position (Ps) and
[ii] a final rotation position (Pf) and **in that**
said starting rotation position is placed between said third stacking station (14) and one among said first or second stacking stations (10, 12).

7. The pallet sorting and stacking system according to claim 6, **characterized in that** it comprises
[a] a fourth stacking station (16) arranged between said first or second stacking stations (10, 12), adjacent to said third stacking station (14), and **in that**
[b] said starting rotation position is placed between said third stacking station (14) or said fourth stacking station (16) and one among said first or second stacking stations (10, 12).

8. The pallet sorting and stacking system (1) according to any of claims 1 to 7, **characterized in that** said first and second sorting station (2, 4) comprise raising means (26) movable between
[i] a lowered position for receiving a pallet (100), and
[ii] a raised position for raising said pallet (100) and
holding means configured to receive said pallet from said raising means (26) and hold said pallet (100) in raised position such that said raising means (26) can move back to said lowered position for receiving further a pallet (100).

9. Method for sorting and stacking pallets (100) comprising the steps of:
[a] sorting a plurality of pallets (100) with a swivelling conveyor arm (22) able to swivel according to a predetermined pallet (100) sorting criterion between:
[i] a lower position in which said conveyor arm (22) can deliver at least one pallet (100) to a first sorting station (2) and
[ii] an upper position in which said conveyor arm (22) can deliver at least one pallet (100) to a second sorting station (4), arranged above said first sorting station (2),
[b] providing a robotic arm (8) attached to the ground and rotatably mounted around a vertical axis (24) surrounded by
[i] said first and second sorting stations (2, 4) and
[ii] a first, a second and a third stacking stations (10, 12, 14), said third stacking station (14), being arranged to the side of the robotic arm (8) remote from said first and second sorting stations (2, 4),
[c] moving with said robot at least one pallet (100) from either said first or said second sorting stations (2, 4) to respectively at least one among a first and/or second and/or third stacking stations (10, 12) for said at least one pallet (100) to be stacked according to said sorting criterion.

10. The method according to claim 9, **characterized in that** it further comprises the steps of:
[a] arranging a first and a second conveyors (18, 20) defining a transporting path between said swivelling conveyor arm (22) and respectively said first and said second sorting stations (2, 4) for transporting said pallet (100) between said swivelling conveyor arm (22) and respectively said first and said second sorting stations (2, 4).

11. The method according to any of claims 9 or 10, **characterized in that** it further comprises the steps of
[a] receiving a pallet (100) at any of said first or second sorting stations (2, 4) in a lowered position,
[b] raising said received pallet (100) to a raised position with raising means (26), and
[c] holding said raised pallet (100) in said raised position with holding means,
[d] moving said raising means (26) back to said lowered position for receiving further a pallet (100) at said first or said second sorting stations (2, 4).

12. The method according to any of the claims 10 or 11, **characterized in that** it further comprising the steps of:
[a] sorting a plurality of pallets (100) between said first and second sorting stations (2, 4) and a third sorting station (6) arranged between said first and second stations (2, 4), said third sorting station (6) being mounted to receive pallets (100) from one among said first or said second conveyors (18, 20), **in that**
[b] said moving step with said robotic arm (8) of at least one pallet (100) from either said first, said second or said third sorting stations (2, 4, 6) to respectively to at least one among said first and/or second and/or third stacking stations (10, 12, 16) for said at least one pallet (100) to be stacked according to said sorting criterion, and **in that**
[c] the most numerous type of pallet is stacked on the nearest of said first or second stacking stations (10, 12) while the less numerous type of pallet is stacked on the third stacking station (16).

13. The method according to claim 12, **characterized in that** during said moving step at least two pallets (100) are moved from different sorting stations among either one of said first, second or third sorting stations (2, 4, 6) to either one of said first, second or third stacking stations (10, 12, 14).
